# EUROPEAN PATENT APPLICATION

(11) **EP 2 133 126 A1**
(43) Date of publication of application: **16.12.2009**
(21) Application number: 08710761.1
(22) Date of filing: 04.02.2008
(51) Int. Cl.: A63F 13/00, A63F 13/12

(54) **GAME SYSTEM, STORAGE SERVER, SCORE SERVER, GAME SYSTEM CONTROL METHOD, INFORMATION RECORDING MEDIUM, AND PROGRAM**

(30) Priority: 29.03.2007 JP 2007087705
(71) Applicant: Konami Digital Entertainment Co., Ltd., Tokyo 107-8324 (JP)
(72) Inventor: MORI, Shoji, Tokyo 107-8324 (JP)
(74) Representative: Rüger, Barthelt & Abel Patentanwälte
(86) International application number: PCT/JP2008/051783
(87) International publication number: WO 2008/120495

(57) **Abstract**

When a game terminal (1) transmits progress status information including a score to a storage server (2), the storage server (2) stores the progress status information into a progress status information storage unit (204). At this time, in cases where the stored score is equal to or above a predetermined threshold, the storage server (2) transmits the score to a score server (3) that registers the received score into a ranking memory unit (301). The threshold is updated by a threshold update unit (306) of the score server (3) based on a predetermined threshold order and at a given timing. Scores below the threshold are deleted in a ranking deletion unit (307). The updated threshold is then transmitted to the storage server (2).

## Description

### Technical Field

The present invention relates to a game system, a storage server, a score server, a game system control method, an information recording medium, and a program suitable for saving, to the storage server, game progress status information that includes scores in a game that a player played on a game terminal, as well as for rapidly updating a score ranking when managing the score ranking by the score server.

### Background Art

Conventionally, network games generally store game progress status information at a game server and the game progress status information is, if necessary, saved or loaded to suspend or resume the game. The following Patent Literature 1 discloses such game technology.
Patent Literature 1: Unexamined Japanese Patent Application KOKAI Publication No. 2002-035423.

[Patent Literature 1] discloses a game system in which a plurality of players compete by utilizing a game server. The techniques disclosed in the literature are focused on an aspect of competing performance in a game whose players start playing at different time points with a time lag and are not focused on competing performance in a game whose players start playing at approximately the same time points.

A score ranking in the network games is only updated, for example, once a day. Thus, even if a player performs well, the result will not be reflected in the ranking instantly and a good result at the certain timing may not even be posted on the ranking since the other players scored better afterwards.

### Disclosure of Invention

### Problem to be Solved by the Invention

In accordance with this, it is required to update a game ranking in real time as possible so that the players' interest toward the game will be maintained.

Further, a technique for distributing a load that is concentrated on a server is required for establishing such a game system.

The present invention, being devised in order to solve such problems, has as an object to provide a game system, a storage server, a score server, a game system control method, an information recording medium, and a program suitable for saving game progress status information that includes scores in a game that a player played on a game terminal, as well as for rapidly updating a ranking when managing the ranking by the score server.

### Means for Solving the Problem

To achieve the above object, a game system according to a first aspect of the present invention comprises a plurality of game terminals, a plurality of storage servers, and a score server, and is configured as follows.

The score server comprises a threshold memory unit, a ranking memory unit, and a threshold transmission unit. The threshold memory unit stores a threshold of scores. The ranking memory unit stores, from among scores of a game played by players, the scores scoring equal to or above the stored threshold in such a manner that the scores are associated with the identification codes of the players, and stored in the order of scores. The threshold transmission unit transmits the stored threshold of scores to each storage server.

The ranking memory unit inserts, when score information is saved, the score information in an appropriate position to be in the order of scores. The ranking memory unit may be a database, a memory in which information is saved in a list, or may be of any other configurations. For example, the ranking memory unit may insert new score information in its correct order. In regard to the present invention, the number of records (score information) will not get too large, so it may be sorted as necessary. More specifically, so long as the sorted result is acquired when scores arc extracted from the ranking memory unit, the timing of sorting can be at any time.

Meanwhile, each of the storage servers comprises a threshold receiving unit and a threshold storage unit. The threshold receiving unit receives the threshold of scores that is transmitted from the score server, and the threshold storage unit stores the received threshold of scores. More specifically, the threshold is managed by the score server and the storage server uses the threshold prepared by the score server.

Moreover, each of the game terminals comprises a progress status information transmission unit. The progress status information transmission unit transmits game progress status information that includes scores in a game that a player played on the game terminal, and the player's identification code to a storage server that was associated with the player in advance from among the storage servers. That is, each of the game terminals transmits the progress status information) to the storage server so as to store the information on the storage server.

Further, to save progress status information to a storage server, players normally subscribe to data storage service. In this case, only subscribed players can store progress status information to the storage server or load the progress status information from the storage server. Accordingly, a ranking on the score server is only performed for the subscribed players.

Additionally, each of the storage servers further comprises a progress status information receiving unit, a progress status information storage unit, and a score transmission unit. The progress status information receiving unit receives game progress status information and the player identification code transmitted from any of the game terminals.

Moreover, the progress status information storage unit, in cases where the received player identification code is associated with the storage server in advance, stores the received game progress status information in association with the received player identification code. Subsequently, the score transmission unit, in cases where a score that is included in the received game progress status information is equal to or above the stored threshold of scores, transmits the score that is included in the game progress status information and the received player identification code to the score server.

That is, the storage server stores the player identification code of players who may use the storage server and only a player identified by the player identification code can store progress status information to that storage server. Also, each of the storage servers does not transmit the scores below the threshold to the score server. Therefore, communication traffic can be controlled and access concentration to the score server can be prevented. The score server can manage the highest ranking scores of the entire ranking without keeping the all scores.

The score server further comprises a score receiving unit and a ranking insertion unit. The score receiving unit receives scores equal to or above the threshold and the player identification codes that are transmitted from the respective storage servers. The ranking insertion unit adds (inserts) the received scores equal to or above the threshold to the ranking memory unit in association with the received player identification codes.

That is, the score server stores only the highest ranking scores that arc equal to or above the threshold transmitted from among the storage servers to the ranking memory unit. This limits scores targeted for ranking and makes it possible to execute updating of the ranking rapidly.

Moreover, the score server further comprises a threshold update unit and a ranking deletion unit. The threshold update unit acquires, from the scores stored in the ranking memory unit, a score of the predetermined threshold order and stores the acquired score as a new threshold of scores in the threshold memory unit. The ranking deletion unit deletes the stored scores below the threshold from the ranking memory unit.

More specifically, the threshold is updated based on the threshold order of score information that is stored to the ranking memory unit and information on scores below the threshold is deleted in the ranking deletion unit. Therefore, the score information that is stored in the ranking memory unit will not keep increasing and will be maintained at a certain level.

The threshold update unit may update the threshold at predetermined intervals, the ranking deletion unit may delete the scores at the predetermined intervals, and the threshold transmission unit may transmit the threshold at the predetermined intervals. Alternatively, the threshold update unit may update the threshold every time a score is added to the ranking memory unit, the ranking deletion unit may delete the score every time the threshold is updated, and the threshold transmission unit may transmit the threshold every time the threshold is updated. In other words, the timing of which the threshold update unit updates the threshold can be flexibly changed depending on the application.

Each of the game terminals further comprises a ranking request transmission unit. The ranking request transmission unit transmits a ranking request that requests the game ranking information to the score server. Each of the game terminals acquires score information by inquiring for the game ranking information to the score server.

The score server further comprises a ranking request receiving unit and a ranking response transmission unit. The rankling request receiving unit receives the ranking request transmitted from each of the game terminals. The ranking response transmission unit transmits, once the ranking request is received, a ranking response that specifies the scores and the player identification codes stored in the ranking memory unit to a game terminal that has transmitted the ranking request.

Each of the game terminals further comprises a ranking response receiving unit and a ranking display unit. The ranking response receiving unit receives the ranking response that is transmitted from the score server, and the ranking display unit displays the scores and the player identification codes that the received ranking response specifies, in the order of scores. Here, ranking information that is displayed on the game terminals includes scores that are equal to or greater than the predetermined threshold at that time and in cases where scores that players acquired are below the threshold, the ranking will not be displayed and messages such as 'unranked' will be displayed.

In the storage server, the score transmission unit further transmits a score distribution table that shows the number of players per a score saved in a progress status information storage unit. Also, in the score server, the score receiving unit further receives score distribution tables transmitted from the respective storage servers. The ranking insertion unit generates a summed score distribution table that shows a summation of the score distribution tables transmitted from the respective storage servers and stores in the ranking memory unit. The ranking response transmission unit transmits a ranking response that further specifics the summed score distribution table stored in the ranking memory unit to a game terminal that has transmitted the ranking request.

In the game terminal, the ranking display unit, in cases where a game score included in the latest progress status information is included (or ranked) within scores which the ranking response transmitted from the score server specifies, displays the order of scores based on the scores that are transmitted from the score server. Meanwhile, in cases where a game score included in the latest progress status information is not ranked within scores that the ranking response transmitted from the score server specifies, based on the summed score distribution table that is further specified in the received ranking response, the player's ranking is estimated and displayed.
That is, an exact ranking is displayed for the scores equal to or above the threshold and an approximate estimated ranking is displayed for the scores below the threshold.

In the score server, the threshold memory unit further stores a distribution partition number. The threshold transmission unit transmits the distribution partition number along with the threshold to each of the storage servers. Further, in the storage server, the threshold receiving unit receives the threshold and the distribution partition number that is transmitted from the score server. The score distribution table, for each score range obtained by dividing the threshold by a distribution partition number that are transmitted from the score server, is created by adding up the number of players who acquired scores within the score range from among the scores stored in the progress status information storage unit. Further, the summed score distribution table is created by summing, for each score range of the storage server.
The summed score distribution table is obtained by adding up the score distribution tables that are created in each storage server for each score range. Therefore, the load will not be concentrated on the score server when the summed score distribution table is generated.

Each of the game terminals comprises a read-out request transmission unit and transmits a read-out request that specifies identification code of a player using the game terminal to the storage server associated with the player in advance.

Each of the storage servers further comprises a read-out request receiving unit, a progress status information read-out unit, and a read-out response transmission unit. The read-out request receiving unit receives the read-out request that is transmitted from each of the game terminals, the progress status information read-out unit reads out the progress status information stored in the progress status information storage unit associated with the player identification code in cases where the player identification code that is specified in the received read-out request is associated with the storage server in advance, and the read-out response transmission unit transmits a read-out response that specifies the read-out progress status information to a game terminal that has transmitted the read-out request.

More specifically, in the storage server, player identification codes of a players who can use the storage server is stored and the storage server provides progress status information only to the player who is identified by those player identification codes. Thus, only a player with the player identification code stored on the storage server can read out the progress status information from the storage server.

Each of the game terminals comprises a read-out response receiving unit and a game resuming unit, wherein the read-out response receiving unit receives the read-out response that is transmitted from the storage server that has transmitted the read-out request, and the game resuming unit resumes a game played by the player according to progress status information that is specified in the received read-out response. More specifically, the game terminal can read out the progress status information that is stored in the storage server and can resume the game based on the progress status information.

According to the present invention, by introducing a threshold, amount of score information transmitted to the score server from each of the storage servers, in other words, amount of information to be stored to the score server can be controlled. In addition, selecting process of whether a score is equal to or above the threshold or not can be distributed among the storage servers. Furthermore, by updating the threshold, the amount of information to be stored in the score server can be controlled to a certain level. Therefore, when a score ranking is managed by the score server, updating of the ranking can be executed rapidly.

The storage server according to the other aspect of the present invention communicates with a plurality of game terminals and a score server, and comprises a threshold receiving unit, a threshold storage unit, a progress status information receiving unit, a progress status information storage unit, and a score transmission unit.
The threshold receiving unit receives a threshold of scores transmitted from the score server. The threshold storage unit stores the received threshold of scores. The progress status information receiving unit receives game progress status information transmitted from any of the game terminals, the progress status information including a score in a game that a player played and an identification code of the player. The progress status information storage unit stores, in cases where the received player identification code is associated with the storage server in advance, the received game progress status information in association with the received player identification code. The score transmission unit transmits, in cases where a score that is included in the game progress status information is equal to or above the stored threshold of scores, the score included in the received game progress status information and the received player identification code to the score server.

The score server according to the other aspect of the present invention communicates with a plurality of game terminals and a plurality of storage servers, and comprises a threshold memory unit, a threshold transmission unit, a score receiving unit, a ranking memory unit, and a ranking insertion unit.
The threshold memory unit stores a threshold of scores. The threshold transmission unit transmits the stored threshold of scores to each of a plurality of storage servers. The score receiving unit receives scores equal to or above the threshold that are transmitted from the respective storage servers, and the player identification codes. The ranking memory unit stores the scores of the game played by the players that are equal to or above the stored threshold in such a manner that the scores are associated with the identification codes of the players, and stored in the order of scores. The ranking insertion unit adds the received score to the ranking memory unit in association with the received player identification code.

A game system control method according to the other aspect of the present invention includes steps that control a game system comprising a plurality of game terminals having a progress status information transmission unit; a plurality of storage servers having a threshold receiving unit, a threshold storage unit, a progress status information receiving unit, a progress status information storage unit, and a score transmission unit; and a score server having a ranking memory unit, a threshold memory unit, a threshold transmission unit, a score receiving unit, and a ranking insertion unit.

Here, at a threshold memory step, the threshold memory unit stores a threshold of scores.
At a ranking memory step, scores equal to or above the stored threshold from the scores of a game that players played are saved to the ranking memory unit in association with the player identification code in the order of scores.
At a threshold transmitting step, the threshold transmission unit transmits the stored threshold of scores to each of the storage servers.
At a threshold receiving step, the threshold receiving unit receives the threshold of scores transmitted from the score server.
At a threshold storing step, the received threshold of scores is stored to the threshold storage unit.
At a progress status information transmitting step, the progress status information transmission unit transmits the game progress status information that includes the score of a game that a player played on the game terminal and the player's identification code to the storage server that is associated with the player from among the storage servers in advance.

At a progress status information receiving step, the progress status information receiving unit receives game progress status information and the player identification code transmitted from any of the game, terminals.
At a progress status information storing step, the received game progress status information is stored to the progress status information storage unit in association with the received player identification code in cases where the received player identification code is associated with the storage server in advance.
At a score transmitting step, the score transmission unit transmits the score included in the game progress status information and the received player identification code to the score server in cases where the score included in the received game progress status information is equal to or above the stored threshold of scores.
At a score receiving step, the score receiving unit receives scores transmitted from the respective storage servers and the player identification code.

At a ranking adding step, the ranking insertion unit adds (inserts) the received scores equal to or above the threshold to the ranking memory unit in association with the received player identification code.

An information recording medium according to the other aspect of the present invention stores a program that causes a computer to function as the above game terminal, the above storage server, and the above score server. An information recording medium according to the other aspect of the present invention stores a program that realizes the above game system control method controlling the game terminal, the storage server, and the score server.

A program according to the other aspect of the present invention is configured so as to cause a computer to function as the above game terminal, the above storage server, and the above score server. A program according to the other aspect of the present invention configures to perform the above game system control method for controlling the game terminal, the storage server, and the score server.

Furthermore, the above program may be recorded on a computer-readable information recording medium, such as a compact disc, a flexible disk, a hard disk, a magneto-optical disk, a digital video disc, magnetic tape, or semiconductor memory.
The above program may be distributed and sold independently of the computer whereupon the program is executed via a computer communications network. In addition, the above information recording medium may be distributed and sold independently of the computer.

### Effect of the Invention

According to the present invention, it is possible to provide a game system, a storage server, a score server, a game system control method, an information recording medium, and a program suitable for saving, to a storage server, game progress status information including scores in a game that a player played on a game terminal as well as, rapidly updating a score ranking when the ranking is managed on the score server.

### Brief Description of Drawings

[FIG. 1] A schematic diagram showing the general configuration of a typical game device on which a game terminal and the like according to an embodiment of the present invention are realized.
[FIG. 2] An explanatory diagram showing a general configuration of a game system according to an embodiment of the present invention.
[FIG. 3A] A table showing an exemplary configuration of a progress status information storage unit.
[FIG. 3B] A table showing an exemplary configuration of a ranking memory unit.
[FIG. 4] A schematic diagram showing general configurations of a score server (left), a storage server (center), and a game terminal (right) of the game system.
[FIG. 5] A flowchart showing a flow of preprocessing for utilizing the game system.
[FIG. 6] A flowchart showing a flow of storage process of progress status information.
[FIG. 7] A flowchart showing a flow of score registration process.
[FIG. 8] A flowchart showing a flow of threshold update process.
[FIG. 9] A flowchart showing a flow of ranking display process.
[FIG. 10] A flowchart showing a flow of read-out process of progress status information.
[FIG. 11] A flowchart showing a flow of ranking display process according to a second embodiment.
[FIG. 12A] A diagram for explaining how to develop a summed score distribution table from a score distribution table having the same thresholds and distribution partition numbers.
[FIG. 12B] A diagram for explaining how to develop a summed score distribution table from a score distribution table having the different thresholds and distribution partition numbers.
[FIG. 13] A diagram for explaining a method of estimating a ranking order from a summed score distribution table.

### Explanation of Reference Numerals

- 1: game terminal
- 2: storage server
- 3: score server
- 10: Internet
- 11: progress status information transmission unit
- 12: ranking request transmission unit
- 13: ranking response receiving unit
- 14: ranking display unit
- 15: read-out request transmission unit
- 16: read-out response receiving unit
- 17: game resuming unit
- 100: game device
- 101: CPU
- 102: ROM
- 103: RAM
- 104: interface
- 105: controller
- 106: external memory
- 107: image processor
- 108: DVD-ROM drive
- 109: NIC
- 110: audio processing unit
- 201: threshold receiving unit
- 202: threshold storage unit
- 203: progress status information receiving unit
- 204: progress status information storage unit
- 205: score transmission unit
- 206: read-out request receiving unit
- 207: progress status information read-out unit
- 208: read-out response transmission unit
- 301: ranking memory unit
- 302: threshold memory unit
- 303: threshold transmission unit
- 304: score receiving unit
- 305: ranking insertion unit
- 306: threshold update unit
- 307: ranking deletion unit
- 308: ranking request receiving unit
- 309: ranking response transmission unit

### Best Mode for Carrying Out the Invention

Hereinafter, embodiments of the present invention will be described. In order to case understanding of the following, an embodiment wherein the present invention has been applied to a game device will be described. However, the present invention may be similarly applied to a variety of information processing devices, such as a computer, a PDA, or a mobile phone. In other words, the embodiment described hereinafter is for the sake of explanation, and does not limit the scope of the present invention. Consequently, while it is possible for those skilled in the art to adopt embodiments wherein some or all of the elements herein have been replaced with respective equivalents, such embodiments are also to be included within the scope of the present invention.

### (Embodiment 1)

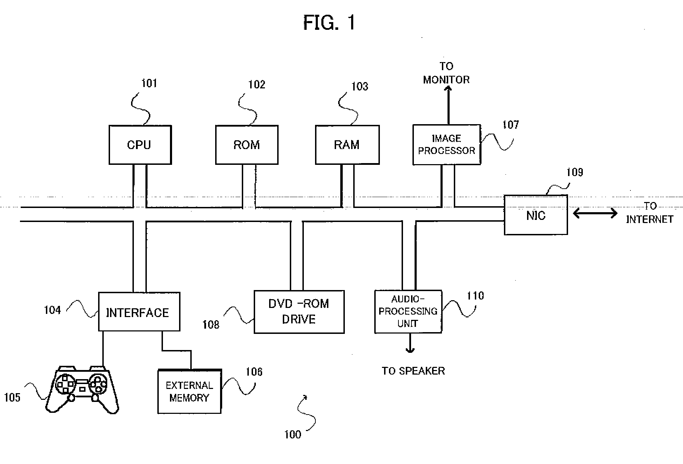

FIG. 1 is a schematic diagram showing a general configuration of a typical game device on which a game terminal according to one of embodiments of the present invention is realized. Hereinafter, an embodiment of the present invention will be described with reference to this drawing.

A game device 100 is provided with a CPU (Central Processing Unit) 101, a ROM (Read Only Memory) 102, a RAM (Random Access Memory) 103, an interface 104, a controller 105, an external memory 106, an image processor 107, a DVD (Digital Versatile Disc)-ROM drive 108, an NIC (Network Interface Card) 109, and an audio processing unit 110.

By inserting a DVD-ROM storing a program and data for a game into the DVD-ROM drive 108 and powering on the game device 100, the program is executed, and the game terminal of the present embodiment is realized.

The CPU 101 controls the general operation of the game device 100, and is connected to individual components for exchanging control signals and data.

The ROM 102 records an IPL (Initial Program Loader) that is executed immediately after power-on. By the CPU 101 executing the IPL, the program recorded on the DVD-ROM is read into the RAM 103, and execution of the program by the CPU 101 is commenced.
Furthermore, the RAM 102 stores programs and various data for an operating system that is necessary for controlling the overall operation of the game device 100.

The RAM 103 is for temporarily storing data and programs, and stores the program and data read out from the DVD-ROM, as well as data needed for other operations, such as advancing the game or conducting chat communication.

The controller 105, connected via the interface 104, receives operation input made when a user plays a game.

The external memory 106, being!detachably connected via the interface 104, stores data such as chat logs in a rewritable manner. By issuing command input via the controller 105, the user can appropriately record such data on the external memory 106.

Recorded on the DVD-ROM loaded into the DVD-ROM drive 108 is, as described above, the program for realizing the game, as well as image data and audio data associated with the game. Under the control of the CPU 101, the DVD-ROM drive 108 conducts read out process of necessary program and data from the DVD-ROM loaded therein. The information so read out is then temporarily stored in the RAM 103 or similar memory.

The image processor 107 processes data read out from the DVD-ROM by using the CPU 101 and an image operation processor (not shown) provided in the image processor 107, and then records the resulting data in a frame memory (not shown) in the image processor 107. The image information recorded in the frame memory is then converted into a video signal at a predetermined synchronous timing, and subsequently output to a monitor (not shown) connected to the image processor 107. Thereby, various types of images are made displayable.

The image operation processor is able to execute high-speed transparent operations such as a blending or overlay operation of a two-dimensional images, as well as various saturation arithmetic calculations.

In addition, the image operation processor is also able to execute high-speed computations whereby polygon information, being arranged in a virtual three-dimensional space and having various kinds of texture added thereto, is rendered by means of z-buffering, thereby acquiring a rendered image as downwardly seen from a given point of view of the polygons arranged in the virtual three-dimensional space.

Furthermore, by means of the CPU 101 and the image operation processor operating in conjunction, it is possible to draw a String of characters as a two-dimensional image in the frame memory or on respective polygon surfaces, according to font information that defines the shapes of the characters. Although the font information herein is recorded in the ROM 102, exclusive font information recorded on the DVD-ROM can also be used.

The NIC 109 serves to connect the game device 100 to the Internet or a similar computer communications network (not shows). The NIC 109 may conform to the 10BASE-T/100BASE-T standard used when forming a LAN (Local Area Network), or alternatively, the NIC 109 may be made up of a modem, such as an analog modem for connecting to the Internee using a telephone circuit, an ISDN (Integrated Services Digital Network) modem, an ADSL (Asymmetric Digital Subscriber Line) modem, or a cable modem for connecting to the Internet using a cable television circuit, as well as an interface (not shown) that interfaces between the CPU 101 and any one of the above modems.

The present date and time information may be received by connecting to the SNTP server in the Internet via the NIC 109 to obtain information therefrom. Further, various server devices of network games may be configured to execute functions equivalent to the SNTP server.

The audio processing unit 110 converts audio data read out from the DVD-ROM into an analog audio signal, and then causes the audio signal to be output from a speaker (not shown) connected thereto. In addition, under control of the CPU 101, the audio processing unit 110 also generates sound effects and music data that should be generated as the game progresses, and then causes a speaker to output sounds corresponding thereto.

In addition, the game device 100 may also be configured to use a hard disk or similar large-capacity external storage device to perform functions equivalent to components such as the ROM 102, the RAM 103, and the DVD-ROM loaded into the DVD-ROM drive 108.

Besides the above, the storage server and score server are realized on general computer, however, a given game device 100 in a group of game devices 100 may be used as the storage server and score server. A general computer is provided with a CPU, RAM, ROM, DVD-ROM drive, and NIC, similar to the game device 100. Moreover, a general computer is also provided with an image processor having simplified functions compared to that of the game device 100, and a hard disk as an external storage device. A general computer may also be configured to use storage media such as flexible disks, magneto-optical disks, and magnetic tape. In addition, in a general computer, devices such as a keyboard and mouse are used as input devices, rather than a controller.

For a network game, a general computer is often used in place of a game-only device. Therefore, hereinafter, a description will be given with reference to the game device 100 shown in FIG. 1 for any of the game terminal, and the storage server and score server unless otherwise specified. The components of the game terminal as well as the storage server and score server may be appropriately substituted by the components of a general computer, and thus, those embodiments arc encompassed in the scope of the present invention.

### (General Configuration of the Game System)

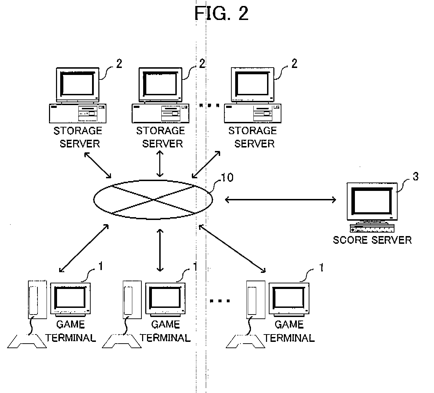

FIG. 2 is an explanatory diagram showing a general configuration of a game system according to an embodiment of the present invention. Hereinafter, an embodiment of the present invention will be described with reference to this drawing.

In the game system, a plurality of game terminals 1, a plurality of storage servers 2, and a score server 3 arc connected via the Internet 10. Typically, a player subscribes to a data storage service in advance (hereinafter, a player who has subscribed to a data storage service is called a subscribed player) and progress status information that is obtained from a game that the player played on a game terminal 1 may be stored in a storage server 2. Here, the progress status information includes information that relates to game progress status such as game scores, phases and scenes, and items possessed at the time when information is stored in the storage server 2. Further, a subscribed player reads out (loads) the progress status information from the storage sever 2 so as to resume the game from the point where the progress status information is stored.

Furthermore, a subscribed player can have access to a score server 3 to obtain a ranking (rank-order information) that shows the ranking of the player's score acquired by playing on the game terminal 1 out of the entire ranking. However, this game system only executes the ranking (placing in order) when the score is equal to or above the predetermined threshold so as to reduce the load on the score server 3.

Moreover, in order to ease understanding, the present embodiment describes an example of saving/loading game progress status information of any one game type and the ranking thereof.
Hereinafter, each configuration of a game terminal 1, a storage server 2, and a score server 3 will be described.

### (General Configuration of the Storage Server)

A storage server 2 stores progress status information relating to a game that a subscribed player played, and if required, the storage server 2 reads out the progress status information and provides the information to a game terminal 1. Further, storage server 2 has a functionality to transmit the score information to a score server 3 in cases where score information included in the progress status information is received from the game terminal 1 and stored, and if the score information is equal to or above the predetermined threshold. A plurality of storage servers 2 exist and a storage server 2 that can be used by each player is determined in advance when a data storage subscription is made.

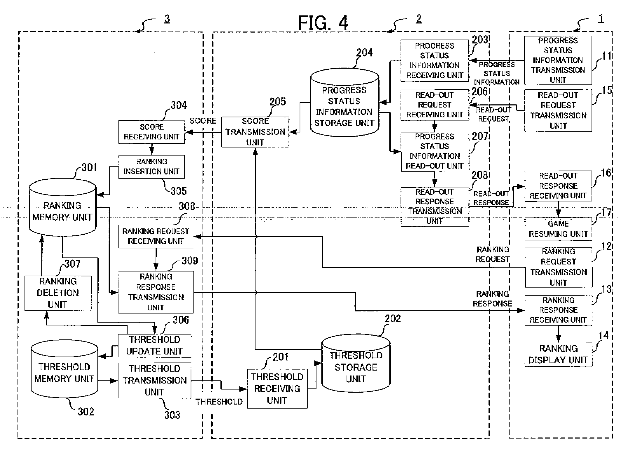

The center section of FIG. 4 shows a general configuration of the storage server 2. As shown in FIG. 4, the storage server 2 comprises, for example, a threshold receiving unit 201, a threshold storage unit 202, a progress status information receiving unit 203, a progress status information storage unit 204, a score transmission unit 205, a read-out request receiving unit 206, a progress status information read-out unit 207, and a read-out response transmission unit 208. Hereinafter, each configuration of a storage server 2 will be described.

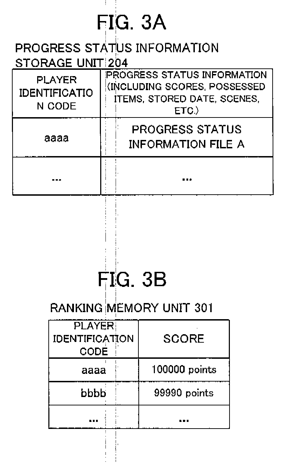

The progress status information storage unit 204 stores progress status information so that a subscribed player can resume from the point where it is discontinued even the subscribed player has suspended the game. The progress status information storage unit 204, for example, has a configuration shown in FIG. 3A and stores a file consisting of the progress status information such as game scores, phases (a stage and a scene, etc.), and possessed items at the point when the player saved the game with a player identification code that identifies the subscribed player as a key.

Further, the progress status information receiving unit 203 receives the progress status information to be stored in the progress status information storage unit 204 from the game terminal 1. The threshold receiving unit 201 receives the threshold value from the below-mentioned score server 3. The threshold storage unit 202 stores the threshold that the threshold receiving unit 201 received. The score transmission unit 205 transmits score information to the below-mentioned score server 3 when the threshold storage unit 202 stores the progress status information including scores equal to or above the threshold stored.

Further, the read-out request receiving unit 206 receives a read-out request specifying the player identification code that is transmitted from any of the game terminals 1. The progress status information read-out unit 207 reads out, in response to the read-out request that the read-out request receiving unit 206 received, the progress status information to be stored in association with the player identification code. The read-out response transmission unit 208 transmits the progress status information that is read out by the progress status information read-out unit 207 in response to the read-out request transmitted from any of the game terminals 1.

In the storage server 2, the CPU 101 functions as the progress status information read-out unit 207. Also, the CPU 101 operates in cooperation with the NIC 109 to function as the threshold receiving unit 201, the progress status information receiving unit 203, the read-out request receiving unit 206, the read-out response receiving unit 208, and the score transmission unit 205. Then, storage device such as an external memory 106 or a hard disk functions as the threshold storage unit 202 and the progress status information storage unit 204.

### (General Configuration of the Score Server)

A score server 3 illustrated in FIG. 2 is a server that replies a score ranking equal to or above the predetermined threshold of a game that a player played in response to the request transmitted from any of the game terminals 1. The score server 3, as illustrated in left section of FIG. 4, comprises, for example, a ranking memory unit 301, a threshold memory unit 302, a threshold transmission unit 303, a score receiving unit 304, a ranking insertion unit 305, a threshold update unit 306, a ranking deletion unit 307, a ranking request receiving unit 308, and a ranking response transmission unit 309. Hereinafter, the each configuration of a score server 3 will be described.

The ranking memory unit 301 stores score information equal to or above the predetermined threshold that is transmitted from the storage server 2. The ranking memory unit 301, for example, as illustrated in FIG. 3B, associates the score information and a player identification code, and stores the score information that is acquired by the subscribed player who is identified by the player identification code. The threshold memory unit 302 stores the threshold. The threshold transmission unit 303 transmits the threshold to the storage server 2. The score receiving unit 304 receives the score information equal to or above the predetermined threshold that is transmitted from the respective storage servers 2. The ranking insertion unit 305 adds the score information that the score receiving unit 304 received from each of the storage servers 2 to the ranking memory unit 301.

The threshold update unit 306 updates the threshold based on the predetermined threshold order. The ranking deletion unit 307 deletes information of scores below the threshold that is saved in the ranking memory unit 301 upon update of the threshold. The ranking request receiving unit 308 receives a request that asks for the current ranking of the scores that was transmitted from any of the game terminals 1. Then, the ranking response transmission unit 309 transmits the ranking information stored in the ranking memory unit 301 in response to the ranking request.

In the score server 3, the CPU 101 functions as the ranking insertion unit 305, the threshold update unit 306, and the ranking deletion unit 307. Also, the CPU 101 operates in cooperation with the NIC 109 to function as the threshold transmission unit 303, the score receiving unit 304, the ranking request receiving unit 308, and the ranking response transmission unit 309. Then, a storage device such as an external memory 106 or a hard disk functions as the ranking memory unit 301 and the threshold memory unit 302.

### (General Configuration of the Game Terminal)

A game terminal 1 illustrated in FIG. 2 is a terminal for playing a game. As described above, a subscribed player may store progress status information of the game played on the game terminal 1 to the storage server 2. Further, the game may be resumed from where it is stored by reading out (loading) the progress status information from the storage server 2. Moreover, the game terminal 1 may acquire a score ranking (order of rank) by making an inquiry to the score server 3. The game terminal 1 with such functions, as illustrated in the right section of FIG. 4, comprises, for example, a progress status information transmission unit 11, a ranking request transmission unit 12, a ranking response receiving unit 13, a ranking display unit 14, a read-out request transmission unit 15, a read-out response receiving unit 16, and a game resuming unit 17. Hereinafter, each general configurations of a game terminal 1 will be described.

The progress status information transmission unit 11 transmits the progress status information that is desired to be saved to the storage server 2. The ranking request transmission unit 12 transmits a request that asks for a current order to the score server 3. The ranking response receiving unit 13 receives a response to the request, or ranking information, from the score server 3. The ranking display unit 14 displays the received ranking information. The read-out request transmission unit 15 transmits a request for reading out the progress status information that is stored in the storage server 2 to the storage server 2. The read-out response receiving unit 16 receives the progress status information that the storage server 2 read out in response to the read-out request transmitted by the read-out request transmission unit 15. The game resuming unit 17 resumes the game based on the read-out progress status information.

In the game terminal 1, the CPU 101 functions as the game resuming unit 17. Also, the CPU 101 operates in cooperation with the NIC 109 to function as the progress status information transmission unit 11, the ranking request transmission unit 12, the ranking response receiving unit 13, the read-out request transmission unit 15, and the read-out response receiving unit 16. Then, an image processor 107 functions as the ranking display unit 14.

In regards to a game system comprising a game terminal 1, a storage server 2, and a score server 3 having the above-mentioned configurations, preprocessing that includes a data storage subscription for a player to save game progress status information to the storage server 2 or load the progress status information from the storage server 2, a data storage process that saves the progress status information of the game that the player played to the storage server 2, a score registration process in which the storage server 2 registers scores equal to or above the threshold to the score server 3, a threshold updating process in which the score server 3 updates the threshold, a ranking display process that displays a ranking order in the game terminal 1, and a progress status read-out process that reads out the progress status information will be described hereinafter.

### (Preprocessing)

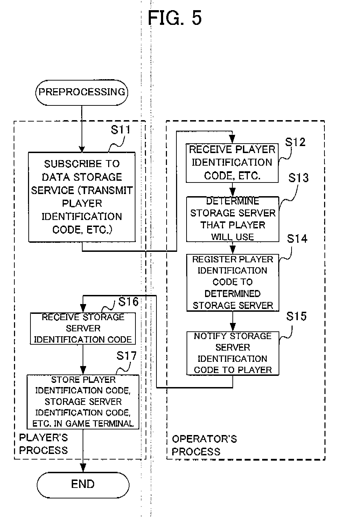

Typically, a player signs a data storage service contract with an operator of a game system in advance and then, initializes the setting so as to store the progress status information to the storage server 2 or obtain the ranking. Hereinafter, such preprocessing will be described in reference to FIG. 5.

For an application for the data storage contract, a player transmits personal information such as a player identification code that identifies the player and a PIN number to the operator of the game system (step S11). For pursuing this application procedure, an application form may be filled in and submitted by mail, or from a dedicated website where the player can input necessary information. Other methods may be taken. When the application is accepted (step S12), the operator determines one storage server as available for the player from among a plurality of storage servers 2 (step S13). Then, the player identification code and the PIN number of the player are associated with each other and registered to a storage device such as a hard disk of the determined storage server 2 as a subscribed player (step S14). Further, the player is notified, by an email or a mail, a server identification code (such as IP address) of the storage server 2 that is available to the player (step S15).

On the other hand, after receiving the notification (step S16), the player operates the controller 105 to input an instruction to store the player identification code, the PIN number, and the server identification code of the storage server 2 that was notified to a storage device such as an external memory 106 or a hard disk of the game terminal 1 (step S17). Afterwards, in cases where the player stores the progress status information, the game terminal 1 transmits the progress status information to the storage server 2 that is identified by the server identification code.

### (Storage Process of Progress Status Information)

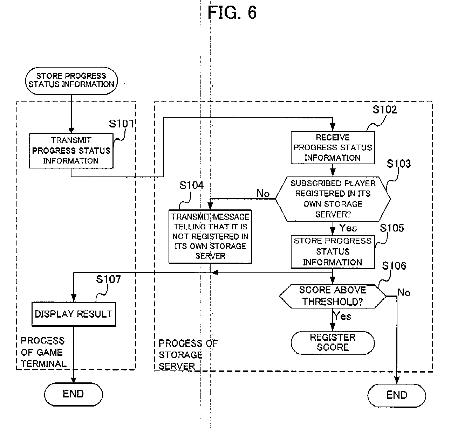

Next, storage process of progress status information will be described in reference to FIG. 6. The storage process of progress status information starts after a player operates the controller 105 to input an instruction for storing (saving) the game progress status information including scores of the game that the player played on the game terminal 1.

Once the storage process of progress status information starts, the progress status information transmission unit 11 transmits the progress status information including the player identification code, the PIN number, and the score to the storage server 2 (step S101). At the storage server 2, once the progress status information receiving unit 203 receives such information (step S102), the storage server 2 determines whether or not the player identified by the received player identification code belongs to the subscribed player who is registered to the storage server 2 (step S103). In other words, the CPU 101 of the storage server 2 determines whether the received player identification code is registered as a subscribed player in its own storage device and the PIN number that is stored in association with the player identification code matches up with the received PIN number. When the PIN number matches to the received PIN number, the player is considered as a subscribed player.

In cases where the player is determined as the subscribed player who is registered in its own storage device (step S103; Yes), the storage server 2 stores the received progress status information in association with the player identification code to the progress status information storage unit 204 (step S105). Then, a message indicating the success of the storage process is transmitted to the game terminal 1. In cases where the player is determined as not being the subscribed player (step S103; No), a message notifying that the player is not registered in its own (the storage process has failed) is transmitted to the game terminal 1 (step S104).

On the other hand, the game terminal 1 displays the result of the storage process (success or not) to a monitor via the image processor 107, and in cases where the storage process failed, a message that encourages to check the server identification code of a destination server will also be displayed (step S107). In this manner, the progress status information of the same subscribed player is always stored in the same storage server 2.

When a score stored in step S105 is equal to or above the threshold stored in the threshold storage unit 202 (step S106; Yes), the storage server 2 starts a score registration process. If not, (step S106; No), the storage process of progress status information is terminated.

### (Score Registration Process)

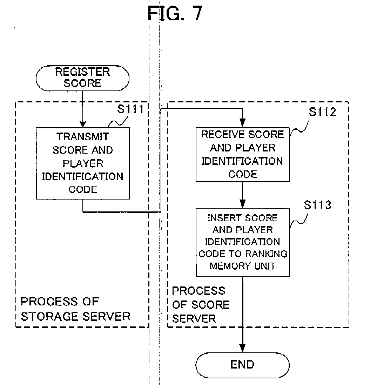

In cases where the score stored in step S105 is equal to or above the threshold that is stored in the threshold storage unit 202 (step S106; Yes), the storage server 2 starts the process of registration of the score to the score server 3. As shown in FIG. 7, in the score registration process, first, the score transmission unit 205 transmits a player identification code and score information to the score server 3 (step S111). The score server 3 receives such information in the score receiving unit 304 (step S112). Subsequently, the ranking insertion unit 305 associates the received player identification code and the score, and adds (inserts) the associated code and score to the ranking memory unit 301 (step S113). The addition is performed at an appropriate location so that the score information will be arranged in the order of scores. Alternatively, in the embodiment, because the record (score information) that is stored in the ranking memory unit 301 will not get large in amount, scores may be sorted accordingly after the addition. The point is, sorting may be performed at any timing as long as the sorted score information is acquired when scores are extracted from the ranking memory unit 301.

As mentioned above, the ranking memory unit 301 only stores scores equal to or above the threshold so that the amount of information stored in the ranking memory unit 301 will not keep expanding and the amount of information will be controlled. Thus, the score server 3 can rapidly reflect the scores that are transmitted from the storage servers 2 to the ranking. Further, the details regarding the threshold including, for example, a method for determining the threshold will be described in the following threshold setting process.

### (Threshold Setting Process)

The game system, only when scores equal to or above the predetermined threshold is acquired, registers the scores to the ranking memory unit 301. If scores are continuously added to the ranking memory unit 301, the amount of stored information grows large and the ranking information cannot be provided rapidly. Therefore, the threshold update unit 306 updates the threshold at a predetermined timing. The predetermined timing may be, for example, periodic or every time a new score is added to the ranking memory unit 301. For a certain time period after the ranking is started, it is expected that scores will be updated frequently. Thus, possibly the threshold may be updated every time the score is added to the ranking memory unit 301. Then, after a certain level of score information is stored, the period between updates may be extended such as once a day or every second day. In this manner, timing of updating the threshold by the threshold update unit 306 may be altered flexibly in response to the situation.

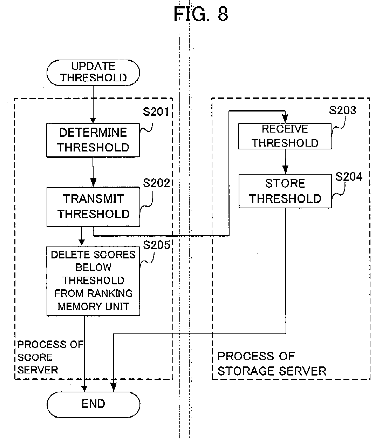

FIG. 8 shows threshold updating process. The threshold update unit 306 first determines the threshold according to the predetermined order of threshold (step S201). For example, if the predetermined order of threshold is specified to be 100th, and the ranking memory unit is in the initial state, a score ranking in the 100th place from the top will be 0. On the other hand, after a certain amount of scores have been stored in the ranking memory unit 301 and, for example, if the score ranking in the 100th place from the top is 2000 points, the threshold will be 2000 points.

Once the threshold is determined, a threshold transmission unit 303 of the score server 3 transmits the threshold to all storage servers 2 (step S202). Then, a threshold receiving unit 201 of each storage server 2 receives the threshold (step S203) and a threshold storage unit 202 stores the received threshold (step S204). The storage server 2, by referring to the threshold stored in the threshold storage unit 202 in this manner, will determine what scores or higher it should transmit to the score server 3.

When the threshold update unit 306 of the score server 3 updates the threshold, scores below the threshold will remain in the ranking memory unit 301. Therefore, every time the threshold is updated, a ranking deletion unit 307 deletes the scores below the threshold from the ranking memory unit 301 (step S205). In this manner, only the scores equal to or above the predetermined threshold arc saved in the ranking memory unit 301 at any time.

### (Ranking Display Process)

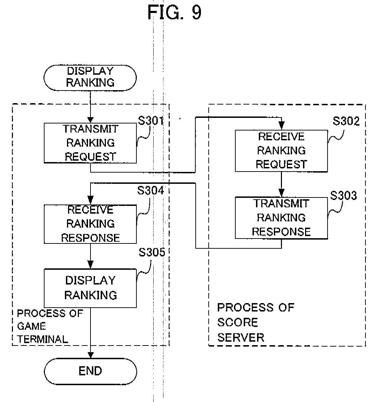

Referring to FIG. 9, ranking display process will be described. After finishing the storage process of the progress status information, the game terminal 1 displays a screen where a user can select whether or not to display the ranking. A player operates the controller 105 and inputs an instruction to display the ranking on the screen so that the ranking display process starts.

After the ranking display process starts, a ranking request transmission unit 12 of the game terminal 1 transmits a ranking request to the score server 3 asking for the present ranking (step S301). When a ranking request receiving unit 308 of the score server 3 receives the ranking request (step S302), a ranking response transmission unit 309 transmits a ranking response that indicates the scores and the player identification code stored in the ranking memory unit to the game terminal 1 of the source of the ranking request after steps S111 to S113 (step 303).

At the game terminal 1 that has transmitted the ranking request, a ranking response receiving unit 13 receives the ranking response that is transmitted from the score server 3 (step S304), a ranking display unit 14 associates the score and the player identification code that are specified in the received ranking response, and displays the ranking in its order of the scores appended with the ranking number (step S305). In this way, the entire ranking of the scores equal to or greater than the predetermined threshold is displayed in association with the identification code.

Here, in cases where a score of play content sent along with the ranking request is included in the scores displayed at step S205, the ranking display unit 14 highlights the score such as by blinking it on and off. Otherwise, a message such as "you are unranked" will be displayed along with the ranking.

Moreover, after the storage server 2 finishes storing progress status information, it may issue, to the game terminal 1, the sender of the progress status information, a notice to notify whether the score was below the threshold. Then, in cases where the score is below the threshold, the ranking display unit 14 in the game torminal 1 will not display the ranking but will instead display the message, "you are unranked" so that process of the game terminal 1 for requesting a ranking information to the score server 3 can be omitted, reducing the load of the scores server 3.

### (Read-Out Process of Progress Status Information)

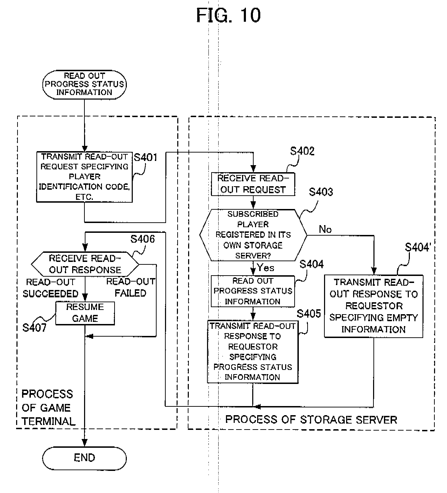

Finally, a read-out process of progress status information will be described in reference to FIG. 10. A player operates the controller 105, inputs an instruction to read out the game progress status information that includes the previously played game's score, and thereby the read-out process of the progress status information begins.

Once the read-out process of the progress status information begins, the read-out request transmission unit 15 in the game terminal 1 transmits a read-out request by specifying the player identification code and the PIN number to the storage server 2 (step S401). At the storage server 2, when the read-out request receiving unit 206 receives this information (step S402), in the same order described at step S103, it is determined whether or not a player identified by the received player identification code is a subscribed player who is registered to own storage server 2 (step S403). That is, it is determined whether the received player identification code is registered as a subscribed player to the memory device of the storage server 2 and the PIN number stored in association with the player identification code matches the received PIN number.

When the storage server 2 determines that a player identified by the received player identification code as the subscribed player registered at its own storage device (step S403; Yes), the progress status information read-out unit 207 reads out the progress status information stored in the progress status information storage unit 204 in association with the received player identification code (step S404), and the read-out response transmission unit 208 transmits the read-out response that specified the read out information to the source game terminal 1 of the read-out request (step S405). When the storage server 2 determines the player identified by the received player identification code as not being the subscribed player (step S403; No), empty information is specified in a read-out response and transmitted to the source game terminal 1 of the read-out request (step S404').

The read-out response unit 16 of the source game terminal 1 of the read-out request receives the read-out response and in cases where the received information is not empty (step S406; read success), the game resuming unit 17 stores the progress status information that is specified in the read-out response to the RAM 103 and the game continues from where the progress status information is stored (step S407). In cases where the received information is empty (step S406; read failure), the game terminal 1 terminates the read-out process. Further, when the read-out process fails, the game terminal 1, along with a message that tells the failure, may display on the monitor a message to encourage confirmation of identification code of the storage server where the data is read out via the image processor 107.
As described above, the read out process of the progress status information terminates.

### (Second Embodiment)

In the above-described embodiment, in cases where a score that a player acquired is not included in the scores that are specified in the ranking response, in other words, when the player's score is not in higher order of the ranking, the players could not know their own rankings. The present embodiment will explain an example of displaying ranking by a certain level of estimation even when scores are below the threshold.

The present embodiment has the same configuration as the first embodiment shown in FIG. 4. However, the score transmission unit 205, the score receiving unit 304, the threshold update unit 306, the threshold memory unit 302, the threshold transmission unit 303, the threshold receiving unit 201, the threshold storage unit 202, the ranking insertion unit 305, the ranking response transmission unit 309, the ranking response receiving unit 13, and the ranking display unit 14 further comprise the below-described functions in addition to the functions shown in the first embodiment. Hereinafter, such new functions of general configuration will be described.

The score transmission unit 205 transmits scores as well as a score distribution table to the score server 3. Then, the score receiving unit 304 receives the scores as well as the score distribution table from the storage server 2 and the ranking memory unit 301 stores the received score distribution table. The threshold update unit 306 updates the threshold as well as a distribution partition number. The threshold memory unit 302 stores the threshold as well as the distribution partition number. The threshold transmission unit 303 transmits the threshold as well as the distribution partition number that is stored in the threshold memory unit 302 to the storage server 2. The threshold receiving unit 201 receives the threshold as well as the distribution partition number from the score server 3 and the threshold storage unit 202 stores those. The ranking insertion unit 305 stores the scores transmitted from the storage server 2 to the ranking memory unit 301 as well as produces a summed score distribution table that shows a summation of the score distribution tables that were transmitted from a plurality of storage servers 2 at that time and stores them to the ranking memory unit 301.

The ranking response transmission unit 309 transmits the scores that were stored in the ranking memory unit 301 as well as the ranking response, by specifying the summed score distribution table that is produced by the ranking insertion unit 305, to the game terminal 1. The ranking response receiving unit 13 receives score information within the ranking memory unit 301 as well as the summed score distribution table from the score server 3. The ranking display unit 14 displays a ranking when the score acquired by the player is ranked within the scores specified in the ranking response and if not, an estimated ranking will be displayed.

A ranking display process in a game system comprising a game terminal 1, a storage server 2, and a score server 3 having the above configurations will be described. Further, players, as described in the first embodiment, is assumed to have already performed preprocessing, storage process of progress status information, score registration process, and threshold setting process.

### (Producing Score Distribution Table)

A score distribution table is produced by the CPU 101 of the storage server 2 in the following procedure. First, the CPU 101 of the storage server 2 acquires the threshold and the distribution partition number that are stored in the threshold storage unit 202. Then, the threshold is divided by the distribution partition number to acquire a score range. If the threshold is P and the distribution partition number is M, M number of score ranges of 0 to P/M-1, P/M to 2P/M-1, ..., (M-1)P/M to P-1, having widths of P/M is acquired. For example, if the threshold is 1000 points and the distribution partition number is 4, the score range will be 0 to 249, 250 to 499, 500 to 749, and 750 to 999.

The CPU 101 of the storage server 2 generates, for every score range, a score distribution table by summing the number of people stored in the progress status information storage unit 204 that scored in the same score range. Then, the score transmission unit 205 transmits the score distribution table to the score server 3. The score receiving unit 304 separately stores the score distribution tables that were received from each of the plurality of storage servers 2 to the ranking memory unit 301.

Moreover, the timing in which the storage server 2 creates a score distribution table and transmits the score distribution table to the score server 3 may be periodical, may be at any given point in time when a load of the storage server 2 is light, or may be at any other time. In regards to the present embodiment, at least once a day at any given time when a load of the storage server 2 is light, a score distribution table is produced and transmitted to the score server 3, but the timing is not limited to this.

### (Creation of Summed Score Distribution Table)

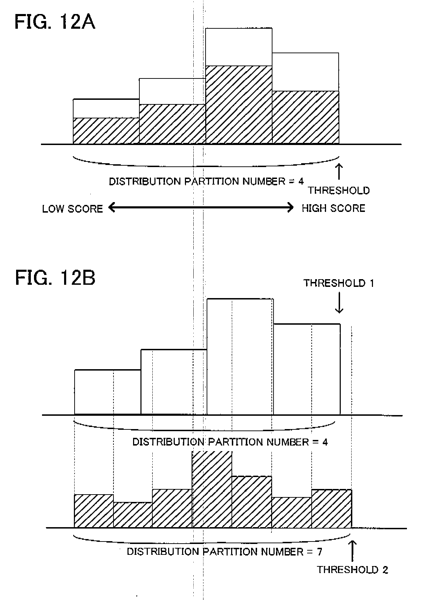

A ranking insertion unit 305 creates a summed score distribution table by acquiring the number of people having scored in each score range from each score distribution table transmitted from the respective storage servers 2, and by summing the acquired number of people for every score range FIG. 12A shows an exemplary summed score distribution table that was created based on a score distribution table of the storage server 2a shown in the shaded regions and a score distribution table of the storage server 2b shown in the plain regions.

In the present embodiment, at least once a day, the score distribution tables are created any time when a load is light and are transmitted to the score server 3; thus, some storage servers 2 may transmit the score distribution tables at a much later timing than the others. In considering such cases, the ranking memory unit 301 stores the score distribution tables that were previously transmitted from each storage server 2 at all times and overwrites the score distribution table when a new score distribution table is transmitted. By this, the ranking memory unit 301 stores the score distribution tables that are transmitted from all the storage servers 2 at any given time. The ranking insertion unit 305 generates a summed score distribution table according to these score distribution tables.

However, in this case, as shown in FIG. 12A, since every score distribution table does not always have the same threshold and the same distribution partition number, the score distribution tables cannot simply be summed. Therefore, when the score distribution tables contain different threshold and distribution partition numbers, the summed score distribution table is obtained by adjusting to a score distribution table with new threshold and distribution partition number and apportioning the other score distribution tables.

For example, the upper section of FIG. 12B shows a score distribution table that is created based on the last threshold and distribution partition number transmitted from the storage server 2b, and the lower section of FIG 12B shows a new score distribution table transmitted from the storage server 2a. Here, the score distribution table transmitted from the storage server 2b is apportioned by adjusting to the score distribution table of the storage server 2a (sections shown in dashed lines) to obtain the sum for each score range of the score distribution table of the storage server 2a.

### (Ranking Display Process)

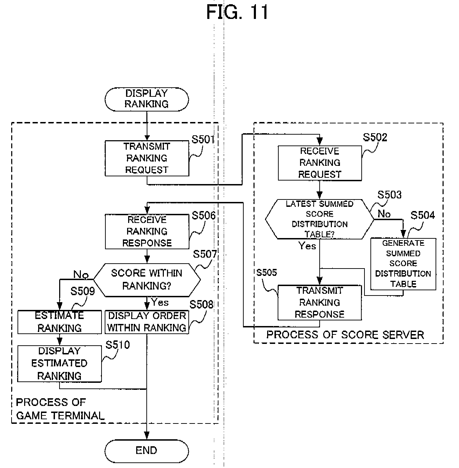

A flow of a ranking display process according to the summed score distribution table that is created as above is described in view of FIG. 11. As in the first embodiment, for example, when the storing process of the progress status information finishes, the game terminal displays a screen where a user can select whether or not to display the ranking. Then, a player operates the controller 105 to input an instruction to display a score ranking that is included in the stored latest progress status information and the ranking display process will commerce,

After the ranking display process commence, the ranking request transmission unit 12 of the game terminal 1 transmits a ranking request that requests the present ranking to the score server 3 (step S501). When the ranking request receiving unit 308 of the score server 3 receives the ranking request (step S502), the CPU 101 of the score server 3 determines whether or not a summed score distribution table is created based on the latest score distribution tables that are transmitted from each of a plurality of storage servers 2 stored in the ranking memory unit 301 at the present (step S503).

The summed score distribution table is generated, basically, when the ranking request is transmitted from the game terminal 1, according to the score distribution tables that are transmitted from each of the plurality of storage servers 2 at that time. However, the summed score distribution table will not change unless a score distribution table is newly transmitted from the storage server 2. Thus, the summed score distribution table is not generated at every ranking request, but only when a score distribution table is newly transmitted from the storage server 2 after the previous summed score distribution table has been developed (that is when the summed score distribution table is not generated based on the latest score distribution tables that are currently stored in the racking memory unit 301) (step S503; No), a summed score distribution table is newly generated and stored in the ranking memory unit 301 (step S504). When a summed score distribution table is created with the latest score distribution tables (step S503; Yes), the processing continues directly to step S505.

Whether a summed score distribution table is generated based on the latest score distribution tables that have been transmitted from each of the plurality of storage servers 2 currently stored in the ranking memory unit 301, is determined, for example, by storing to the storage device the number of score distribution tables that are transmitted so far and the number of score distribution tables that were transmitted at the time the latest summed score distribution table was created, and comparing these two numbers. In cases where these two numbers are the same, the summed score distribution table is determined as created from the latest score distribution tables.

Next, after steps S111 to S 113 are performed, the ranking response transmission unit 309 transmits the scores that are stored in the ranking memory unit 301, along with player identification codes associated with the scores, and the ranking response that specifies a summed score distribution table to the source game terminal 1 of the ranking request (step 505).

At the game terminal 1 that has transmitted the ranking request, the ranking response receiving unit 13 receives the ranking response that is transmitted from the score server 3 (step S506). Subsequently, the CPU 101 of the game terminal 1 determines whether or not the score, included in the latest progress status information, and acquired by the player, is included in the scores that are specified in the ranking response transmitted from the score server 3 (step S507). In cases where the player's score is included (step S507; Yes), the score that the player acquired is a high ranking score equal to or above the threshold at that time. Thus the ranking display unit 14, as in the first embodiment, associates the scores specified in the ranking response and the player identification code, give ranking numbers in the order of the scores and display (step S508).

On the other hand, in cases where the score which the player acquired is not included in the scores that are specified in the ranking response transmitted from the score server 3 (step S507; No), the CPU 101 of the game terminal 1 will acquire the summed score distribution table specified in the ranking response to estimate the player's score based on the summed score distribution table (step S509).

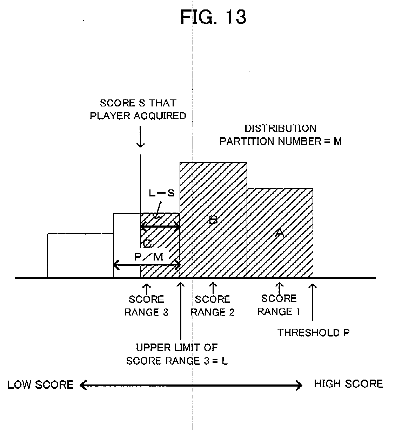

Suppose, for example, the case as shown in FIG. 13, where in the summed score distribution table, the number of people in the score range 1 is A, the number of people in the score range 2 is B, and the number of people in the score range 3 is C; a threshold is P, a distribution partition number is M, a player's score is S, and an upper limit of the score range 3 is L. The number of players who acquired the score equal to or above S is estimated as A+B+(C*(L-S)/(P/M), and thus, the number of individuals is the estimated ranking of the player. That is, conceptually, by calculating the area shown in slashes shown in FIG. 13, the ranking of the scores acquired by the players is estimated. Finally, the ranking display unit 14 displays the acquired estimated ranking (step S510).

### (Distribution Partition Number Update)

A distribution partition number is, at the store server 3, determined by the threshold update unit 306 and transmitted to the storage server 2 by the threshold transmission unit 303. A possible method of deciding the distribution partition number may be, for example, determining the distribution partition number for each score range to include the comparable number of individuals at any given time based on the threshold and the most newly generated summed score distribution table. Alternatively, many distribution partition numbers may be employed to perform an estimation of the ranking below the threshold with higher accuracy. Further, in order to reduce the burden of creating the score distribution table and summed score distribution table, and the estimating process of the ranking in the game terminal 1, the distribution partition number may be decreased.

In either case, with the present embodiments, the distribution partition number can flexibly be modified according to the status on the score server 3. Moreover, the threshold update unit 306 updates the distribution partition number along with the update timing of the threshold in the first embodiment and when the distribution partition number is updated, the threshold transmission unit 303 transmits the distribution partition number to the storage server 2 along with the transmitting timing of the threshold.

The embodiments of the present invention are described above, although, for implementing the present invention, various modifications and applications of the modes are possible and the present invention is not limited to the above-described embodiments.

For example, in the foregoing embodiments, the processing to perform the ranking of one given game was described. However, for example, the progress status information storage unit can simultaneously store a plurality of game progress status information, so long as it is possible to include the game identification code that identifies the game played to the progress status information, and store in association with the player identification code. More specifically, as in the typical memory card that is not of exclusive use for individual games, the progress status information storage unit can store the progress status information. At this time, the score server provides a ranking memory unit and a threshold memory unit for each type of game.

On the other hand, the storage server holds different threshold storage units for each type of game. In cases where the progress status information transmission unit of the game terminal transmits the progress status information to the storage server, it is only necessary to transmit it along with the game identification code that identifies the game that was played. The score transmission unit of the storage server only needs to transmit scores so long as the score that is included in the transmitted progress status information is equal to or above the threshold stored in the threshold storage unit associated with the game identification code. The score server receiving the scores stores the scores in the ranking memory unit that is associated with the game identification code. This enables acquring the ranking for each type of game.

When a game is loaded, the read-out request transmission unit of the game terminal may specify game identification code along with such as player identification code, and the read-out request transmission unit of the game terminal may transmit the read-out request to the storage server. Then, the progress status information read-out unit may read out the progress status information that is stored in association with the specified game identification code and the player identification code.

The present application claims priority rights based on Japanese Patent Application No. 2007-087705, the entire contents of which are incorporated herein by reference.

## Claims

1. A game system comprising a plurality of game terminals (1), a plurality of storage servers (2), and a score server (3), wherein
(a) the score server (3) includes:
a threshold memory unit (302) that stores a threshold of scores,
a ranking memory unit (301) that stores, from among scores of a game that players played, the scores scoring equal to or above the stored threshold in such a manner that the scores are associated with identification codes of the players, and stored in the order of scores, and
a threshold transmission unit (303) that transmits the stored threshold of scores to each of the storage servers (2);
(b) each of the storage servers (2) includes:
a threshold receiving unit (201) that receives a threshold of scores transmitted from the score server (3), and
a threshold storage unit (202) that stores the received threshold of scores;
(c) each of the game terminals (1) includes:
a progress status information transmission unit (11) that transmits game progress status information including the score of a game that a player played on the game terminal (1), and the player's identification code to a storage server (2) associated with the player from among the storage servers in advance, and wherein
(d) each of the storage servers (2) further includes:
a progress status information receiving unit (203) that receives the game progress status information and the player identification code transmitted from any of the game terminals (1),
a progress status information storage unit (204), in cases where the received player identification code is associated with the storage server in advance, stores the received game progress status information in association with the received player identification code, and
a score transmission unit (205), in cases where the score included in the received game progress status information is equal to or above the stored threshold of scores, transmits the score included in the game progress status information and the received player identification code to the score server; and
(e) the score server (3) further includes:
a score receiving unit (304) that receivers scores equal to or above the threshold and player identification codes that are transmitted from the respective storage servers (2), and
a ranking insertion unit (305) that adds the received scores equal to or above the threshold to the ranking memory unit (301) in association with the received player identification codes.

2. The game system according to claim 1, wherein
(f) the score server (3) further includes:
a threshold update unit (306) that acquires a score of a predetermined threshold order from among the scores stored in the ranking memory unit (301) and stores the acquired score as a new threshold of scores to the threshold memory unit (302), and
a ranking deletion unit (307) that deletes the stored scores below the threshold from the ranking memory unit (301).

3. The game system according to claim 2, wherein
the threshold update unit (306) updates the threshold at predetermined intervals,
the ranking deletion unit (307) deletes the scores at the predetermined intervals, and
the threshold transmission unit (303) transmits the threshold at the predetermined intervals.

4. The game system according to claim 2, wherein
the threshold update unit (306) updates the threshold every time a score is added to the ranking memory unit (301),
the ranking deletion unit (307) deletes the scores every time the threshold is updated, and
the threshold transmission unit (303) transmits the threshold every time the threshold is updated.

5. The game system according to claim 1, wherein
(g) each of the game terminals (1) further includes:
a ranking request transmission unit (12) that transmits a ranking request that requests the game ranking information to the score server (3);
(h) the score server (3) further includes:
a ranking request receiving unit (308) that receives the ranking request transmitted from each of the game terminals (1), and
a ranking response transmission unit (309) that transmits, once the ranking request is received, a ranking response specifying the scores and the player identification codes stored in the ranking memory unit (301) to a game terminal (1) that has transmitted the ranking request; and
(i) each of the game terminals (1) further includes:
a ranking response receiving unit (13) that receives the ranking response transmitted from the score server (3), and
a ranking display unit (14) that displays the scores and the player identification codes that are specified in the received ranking response, in the order of scores.

6. The game system according to claim 5, wherein
in the storage server (2), the score transmission unit (205) further transmits to the score server a score distribution table that shows the number of players per a score saved in the progress status information storage unit (204);
in the score server (3), the score receiving unit (304) further receives the score distribution tables transmitted from the respective storage servers (2),
the ranking insertion unit (305) generates a summed score distribution table that shows a summation of the score distribution tables transmitted from the respective storage servers (2) and stores the generated summed score distribution table in the ranking memory unit, and
the ranking response transmission unit (309) transmits a ranking response that further specifies the summed score distribution table stored in the ranking memory unit (301) to a game terminal that has transmitted the ranking request; and
in the game terminal (1), the ranking display unit (14), in cases where a game score included in latest progress status information is included within scores to be specified in the ranking response transmitted from the score server (3), displays the order of scores based on the score transmitted from the score server, and in cases where a game score included in the latest progress status information is not included within scores that is to be specified in the received ranking response, based on the summed score distribution table that is further to be specified in the received ranking response, the player's ranking is estimated and displayed.

7. The game system according to claim 6, wherein
in the score server (3), the threshold memory unit (302) further stores a distribution partition number, and
the threshold transmission unit (303) transmits the distribution partition number along with the threshold to each of the storage servers;
in the storage server (2), the threshold receiving unit (201) receives the threshold and the distribution partition number that are transmitted from the score server;
the score distribution table, for each score range that was obtained by dividing the threshold transmitted from the score server by the distribution partition number, is created by adding up the number of players who acquired scores within the score range from among the scores stored in the progress status information storage unit (204); and
the summed score distribution table is created by adding for each score range of the storage server.

8. The game system according to claim 1, wherein
(j) each of the game terminals (1) further includes:
a read-out request transmission unit (15) that transmits a read-out request specifying an identification code of a player using the game terminal (1) to the storage server that is associated with the player in advance;
(k) each of the storage servers (2) further includes:
a read-out request receiving unit (206) that receives the read-out request transmitted from each of the game terminals (1),
a progress status information read-out unit (207) that reads out progress status information stored in association with the player identification code in the progress status information storage unit in cases where the player identification code that is specified in the received read-out request is associated with the storage server in advance, and
a read-out response transmission unit (208) that transmits a read-out response specifying the read out progress status information to the game terminal from which the read-out request was transmitted; and
(l) each of the game terminals (1) further includes:
a read-out response receiving unit (16) that receives the read-out response that is transmitted from the storage server (2) from which the read-out request is transmitted, and
a game resuming unit (17) that resumes a game played by the player according to the progress status information that is to be specified in the received read-out response.

9. A plurality of storage servers (2) communicating with a plurality of game terminals (1) and a score server (3), the storage server comprising:
a threshold receiving unit (201) that receives a threshold of scores transmitted from the score server (3);
a threshold storage unit (202) that stores the received threshold of scores;
a progress status information receiving unit (203) that receives game progress status information transmitted from any of the game terminals, the progress status information including a score in a game that a player played and an identification code of the player;
a progress status information storage unit (204) that stores the received game progress status information in association with the received player identification code in cases where the received player identification code is associated with the storage server in advance; and
a score transmission unit (205) that transmits the score included in the game progress status information and the received player identification code to the score server in cases where the score included in the received game progress status information is equal to or above the stored threshold of scores.

10. A score server (3) communicating with a plurality of game terminals (1) and a plurality of storage servers (2), the score server comprising:
a threshold memory unit (302) that stores a threshold of scores;
a threshold transmission unit (303) that transmits the stored threshold of scores to each of the plurality of storage servers;
a score receiving unit (304) that receives scores equal to or above the threshold and identification codes of players that are transmitted from the respective storage servers (2);
a ranking memory unit (301) that stores, from among scores of a game played by the player, the scores scoring equal to or above the stored threshold in such a manner that the scores are associated with identification codes of players, and stored in the order of scores, and
a ranking insertion unit (305) that adds the received score to the ranking memory unit in association with the received player's identification code.

11. A game system control method controlling a plurality of game terminals (1), a plurality of storage servers (2), and a score server (3), wherein each of the game terminals (1) has a progress status information transmission unit (11), each of the storage servers (2) (1) has a progress status information transmission unit (11), each of the storage servers (2) has a threshold receiving unit (201), a threshold storage unit (202), a progress status information receiving unit (203), a progress status information storage unit (204) and a score transmission unit (205), and the score server (3) has a threshold memory unit (302), a ranking memory unit (301), a threshold transmission unit (303), a score receiving unit (304) and a ranking insertion unit (305), and wherein:
(a) the score server (3) includes:
a threshold memory step of storing a threshold of scores in the threshold memory unit (302),
a ranking memory step of storing, from among scores of a game that players played, the scores scoring equal to or above the stored threshold of scores to the ranking memory unit (301) in such a manner that the scores are associated with identification codes of the players, and stored in the order of scores, and
a threshold transmitting step of transmitting the stored threshold of scores to each of the storage servers (2) in the threshold transmission unit (303);
(b) each of the storage servers (2) includes:
a threshold receiving step of receiving the threshold of scores transmitted from the score server (3) in the threshold receiving unit (201), and
a threshold storing step of storing the received threshold of scores in the threshold storage unit (202);
(c) each of the game terminals (1) includes:
a progress status information transmitting step of transmitting the game progress status information including the score of a game that a player played on the game terminal (1) and the player's identification code to a storage server associated in advance with the player from among the storage servers in the progress status information transmission unit (11);
(d) each of the storage servers (2) further includes:
a progress status information receiving step, by the progress status information receiving unit (203), of receiving the game progress status information and the player identification code that are transmitted from any of the game terminals,
a progress status information storing step of storing the received game progress status information in the progress status information storage unit (204) in association with the received player identification code in cases where the received player identification code is associated with the storage server in advance, and
a score transmitting step of transmitting the score included in the game progress status information and the received player identification code to the score server in the score transmission unit (205) in cases where the score included in the received game progress status information is equal to or above the stored threshold of scores; and
(e) the score server (3) further includes:
a score receiving step of receiving a score equal to or above the threshold and the player identification code that are transmitted from the respective storage servers (2) in the score receiving unit (304), and
a ranking adding step of adding (inserting) the received score equal to or above the threshold to the ranking memory unit (301) in association with the received player identification code in the ranking insertion unit (305).

12. An information recording medium storing a program including a program for a game terminal that causes each of computers of a plurality of game terminals to function as a game terminal (1), a program for a storage server that causes each of computers for a plurality of storage servers to function as a storage server (2), and a program for a score server that causes a computer for a score server to function as a score server (3), wherein
(a) the program for the score server causes the computer for the score server to function as:
a threshold memory unit (302) that stores a threshold of scores,
a ranking memory unit (301) that stores, from among scores of a game that players played, the scores scoring equal to or above the stored threshold in such a manner that the scores are associated with identification codes of the players, and stored in the order of scores, and
a threshold transmission unit (303) that transmits the stored threshold of scores to each of the computers for the storage servers;
(b) the program for the storage sever causes each of the computers for the storage servers to function as:
a threshold receiving unit (201) that receives a threshold of scores transmitted from the score server, and
a threshold storage unit (202) that stores the received threshold of scores;
(c) the program for the game terminal causes each of the computers for the game terminals to function as:
a progress status information transmission unit (11) that transmits game progress status information including the score of game that a player played on the game terminal, and the player's identification code to a computer for a storage server that is associated with the player in advance from the computers of the storage servers;
(d) the program for the storage server further causes each of the computers for the storage servers to function as:
a progress status information receiving unit (203) that receives the game progress status information and the player identification code that are transmitted from any of the computers for the game terminals,
a progress status information storage unit (204) that stores the received game progress status information in association with the received player identification code in cases where the received player identification code is associated with the storage server in advance, and
a score transmission unit (205), in cases where the score included in the received game progress status information is equal to or above the stored threshold of scores, transmits the score included in the game progress status information and the received player identification code to the computer for the score server; and
(e) the program for the score server further causes the computer for the score server to function as:
a score receiving unit (304) that receives scores equal to or above the threshold and player identification codes that are transmitted from each of the computers of the storage servers, and
a ranking insertion unit (305) that adds the received scores equal to or above the threshold to the ranking memory unit in association with the received player's identification codes.

13. A program including a program for a game terminal that causes each of computers for a plurality of game terminals to function as a game terminal (1), a program for a storage server that causes each of computers for a plurality of storage servers to function as a storage server (2), and a program for a score server that causes a computer for a score server to function as a score server (3), wherein
(a) the program for the score server causes the computer for the score server to function as:
a threshold memory unit (302) that stores a threshold of scores,
a ranking memory unit (301) that stores, from among scores of a game that players played, the scores scoring equal to or above the stored threshold in such a manner that the scores are associated with identification codes of the players, and stored in the order of scores, and
a threshold transmission unit (303) that transmits the stored threshold of scores to each of the computers for the storage servers;
(b) the program for the storage server causes each of the computers for the storage servers to function as:
a threshold receiving unit (201) that receives a threshold of scores transmitted from the score server, and
a threshold storage unit (202) that stores the received threshold of scores;
(c) the program for the game terminal causes each of the computers for the game terminals to function as:
a progress status information transmission unit (11) that transmits game progress status information including the score of a game that a player played on the game terminal, and the player's identification code to a computer for a storage server that is associated with the player in advance from the computers of the storage servers;
(d) the program for the storage sever further causes each of the computers for the storage servers to function as:
a progress status information receiving unit (203) that receives the game progress status information and the player identification code that are transmitted from any of the computers for the game terminals,
a progress status information storage unit (204) that stores the received game progress status information in association with the received player identification code in cases where the received player identification code is associated with the storage server in advance, and
a score transmission unit (205), in cases where the score included in the received game progress status information is equal to or above the stored threshold of scores, transmits the score included in the game progress status information and the received player identification code to the computer for the score server; and
(e) the program for the score server further causes the computer for the score server to function as:
a score receiving unit (304) that receives scores equal to or above the threshold and player identification codes that are transmitted from each of the computers of the storage servers, and
a ranking insertion unit (305) that adds the received scores equal to or above the threshold to the ranking memory unit in association with the received player's identification codes.
